# EUROPÄISCHE PATENTSCHRIFT

(11) **EP 2 745 982 B1**
(45) Veröffentlichungstag und Bekanntmachung des Hinweises auf die Patenterteilung: **04.03.2020**
(21) Anmeldenummer: 13005693.0
(22) Anmeldetag: 06.12.2013
(51) Int. Cl.: B23P 21/00, B62D 65/02, B65G 1/137

(54) **Produktionssystem**
Production system
Système de production

(30) Priorität: 08.12.2012 DE 102012024038
(43) Veröffentlichungstag der Anmeldung: 25.06.2014
(73) Patentinhaber: Identytec GmbH & Co. KG, 30880 Hannover/Laatzen (DE)
(72) Erfinder: Thorsten, Finke, 31191 Algermissen (DE)
(74) Vertreter: Wagner, Carsten

(56) Entgegenhaltungen:
- EP-A1- 0 169 156
- EP-A1- 0 235 488
- EP-A1- 1 083 135
- EP-A1- 1 099 652
- WO-A1-96/31833
- GB-A- 1 384 778
- JP-A- S5 957 802
- US-A- 4 698 775
- ZA-A- 200 305 070

## Beschreibung

Die Erfindung betrifft ein Produktionssystem der im Oberbegriff des Anspruchs 1 genannten Art für die Serienproduktion insbesondere von Kraftfahrzeugen.

Die In der Serienproduktion von Kraftfahrzeugen verwendeten Bauteile werden häufig in A-, B- und C-Teile klassifiziert, wobei es sich bei den C-Teilen um Schüttgut ohne besonderen Wert handelt. Insbesondere C-Teile, bei denen es sich beispielsweise um Schrauben, Muttern oder dergleichen handeln kann, werden in Materialbehältern bereitgestellt, die nachfolgend auch kurz als Behälter bezeichnet werden. Die Behälter enthalten dabei in der Regel jeweils eine große Anzahl gleichartiger Bauteile.

Die bekannten Produktionssysteme weisen einen Behälter-Lagerbereich zur Lagerung der Behälter auf, die für die Produktion bestimmte Bauteile enthalten. Daneben weisen die bekannten Produktionssysteme entfernt von dem Behälter-Lagerbereich angeordnete Entnahmeregale auf, aus denen Behälter von Werkern entnehmbar sind. Die Entnahmeregale weisen häufig als schiefe Ebene ausgebildete Ablaufbahnen auf, wobei auf einer Ablaufbahn eine Mehrzahl von Behältern hintereinander angeordnet sind und üblicherweise Materialbehälter, die auf der selben Ablaufbahn angeordnet sind, die gleichen Bauteile enthalten. Während des Fertigungsprozesses werden zunächst die Bauteile aus einem in Ablaufrichtung vorderen Materialbehälter entnommen. Wenn dieser Materialbehälter vollständig entleert ist, kann er aus der Ablaufbahn entfernt werden, so dass dahinter angeordnete Materialbehälter nachrutschen. Alternativ hierzu ist es auch möglich, dass ein Werker einen noch gefüllten Materialbehälter aus der Ablaufbahn entnimmt, so dass wiederum dahinter angeordnete Behälter nachrutschen können.

Die Material-Bedarfsplanung erfolgt dabei an einer zentralen Einrichtung oder ggf. mehreren zentralen Einrichtungen. Ein Verfahren zum Melden von Materialvorräten an den einzelnen Entnahmeregalen besteht beispielsweise darin, dass jedem Entnahmeregal eine Karte zur Materialbedarfsplanung zugeordnet ist. Dabei wird in regelmäßigen Abständen an den einzelnen Entnahmeregalen durch einen Werker oder Logistiker geprüft, ob noch genügend Material zur Verfügung steht. Ist dies nicht der Fall, so entnimmt der Werker oder Logistiker die Karte, die dann zu einer zentralen Einrichtung gebracht wird, an der die Materialbedarfsplanung erfolgt. Im Rahmen der Materialbedarfsplanung kann dann eine Nachlieferung des entsprechenden Materials an die jeweilige Stelle erfolgen.

Um das Melden von Materialvorräten an die zentrale Einrichtung zu vereinfachen, ist es bekannt, einen sogenannten Abrufknopf zu verwenden. Dabei betätigt ein Werker bei Bedarf, also beispielsweise dann, wenn der vorletzte Materialbehälter aus einer Ablaufbahn entnommen wird, den Abrufknopf, so dass an der zentralen Einrichtung eine Materialanforderung ausgelöst wird, in deren Folge dann das zur Neige gehende Material zu dem jeweiligen Entnahmeregal geliefert werden kann. Durch den Abrufknopf ist also das Melden eines Materialbedarfes an die zentrale Einrichtung automatisiert.

Um die Bedarfsplanung weiter zu automatisieren, ist es aus der DE 20 2007 01 2926 U1 bekannt, durch Sensormittel abzufühlen, ob sich an einer vorbestimmten Stelle des Entnahmeregales ein Behälter befindet. Beispielsweise und insbesondere können die Sensormittel die Position wenigstens eines Materialbehälters auf der Ablaufbahn eines Entnahmeregales abfühlen. Dabei können die jeweiligen Sensormittel beispielsweise per Funk mit einer zentralen Einrichtung verbunden sein und damit einen entsprechenden Materialbedarf automatisch an die zentrale Einrichtung melden. Auf diese Weise ist die Anforderung von Materialbehältern automatisierbar, so dass sie besonders zuverlässig gestaltet ist. Da die Anforderung von Materialbehältern nicht mehr durch die Werker erfolgen muss, sind die Werker bei ihrer Arbeit entlastet.

Die bekannten Produktionssysteme weisen ferner Transportmittel zum Transport von Behältern von dem Behälter-Lagerbereich zu den Entnahmeregalen auf. Der Transport erfolgt üblicherweise so, dass ein Transportfahrzeug an einem Kommissionierplatz, der auch als "Bahnhof" oder "Supermarkt" bezeichnet wird, mit gefüllten Behältern beladen wird. Nach der Beladung fährt ein Fahrer das Transportfahrzeug zu derjenigen Stelle, an der ein Materialbedarf besteht und an der ein auf dem Transportfahrzeug mitgeführter Materialbehälter in das Entnahmeregal einzusetzen ist. Das Einsetzen des Materialbehälters in das Entnahmeregal führt dabei der Logistiker aus, wobei er gleichzeitig an den Entnahmeregalen die bereitgestellte Leerbehälter mitnimmt. Nach dem Abliefern sämtlicher Behälter fährt der Logistiker das Transportfahrzeug zurück zu dem Kommissionierplatz, so dass das Transportfahrzeug erneut mit gefüllten Materialbehältern beladen werden kann und sich der Vorgang wiederholt.

Durch EP 1 099 652 A1 sind ein Verfahren und eine Vorrichtung zum Kommissionieren gemäß dem Oberbegriff des Anspruchs 1 bekannt. Die Vorrichtung weist ein Kommissionierregal auf, das von einem Regalbediengerät bedient wird. Das Regalbediengerät entnimmt zu kommissionierende Artikel aus einem Lagerregal. Nach dem Entnehmen eines Artikels aus dem Lagerregal übergibt das Regalbediengerät den Artikel an das Kommissionierregal. Geneigte Kommissionierkanäle sorgen dafür, dass Gegenstände zwischen dem Regalbediengerät und dem Kommissionierregal durch Schwerkraft hin- und zurückbefördert werden können.

Durch EP 0 235 488 A1 ist ein in der Lagerlogistik einsetzbares automatisches Handhabungssystem bekannt.

Durch EP 1 083 135 A1 ist ein halbautomatisches Kommissioniersystem für ein Hochregallager bekannt, das einen hängenden Kommissionierwagen aufweist, dessen Front für Übergabevorgänge direkt gegen ein Regal verfahrbar ist. Dabei können matrixartig jeweils mehrere Warenbehälter gehandhabt werden.

Durch EP 0 169 156 A1 ist ein automatisches Handhabungsssystem für ein Regallager bekannt.

Auch aus US 4,698,775 ist ein automatisches Handhabungssystem für Regallager bekannt.

Durch GB 1 384 778 A ist ein Regalbediengerät für Regallager bekannt.

Der Erfindung liegt die Aufgabe zugrunde, ein Produktionssystem der im Oberbegriff des Anspruches 1 genannten Art für die Serienproduktion insbesondere von Kraftfahrzeugen anzugeben, das weiter vereinfacht und prozesssicherer gestaltet ist.

Diese Aufgabe wird durch den im Anspruch 1 angegebene Erfindung gelöst.

Der Erfindung liegt der Gedanke zugrunde, die logistische Kette bei der Lieferung von Materialbehältern an die einzelnen Entnahmeregale weiter zu automatisieren. Erfindungsgemäß ist zu diesem Zweck vorgesehen, dass die Transportmittel wenigstens ein fahrerloses Transportfahrzeug (FTF) aufweisen und dass das FTF derart eingerichtet und ausgebildet ist, dass Behälter automatisch an Entnahmeregalen abgebbar sind.

Auf diese Weise ist die Materialanforderung und - Nachlieferung weiter automatisiert. Beispielsweise kann das fahrerlose Transportfahrzeug, das nachfolgend auch kurz als FTF bezeichnet wird, an dem Kommissionierplatz mit Behältern beladen werden, die das an verschiedenen Stellen in dem Produktionssystem benötigte Material enthalten. Nach der Beladung fährt das FTF automatisch zu den jeweiligen Entnahmeregalen, wo die jeweils benötigten Behälter automatisch an das betreffende Entnahmeregal abgegeben werden. Auf diese Weise sind Fehler vermieden, die bei einer manuellen Abgabe von Behältern an die Entnahmeregale durch ein Irrtum des jeweiligen Logistikers entstehen. Auf diese Weise ist die Prozesssicherheit der erfindungsgemäßen Produktionssystems wesentlich erhöht.

Ein weiterer Vorteil der Erfindung besteht darin, dass Produktionsunterbrechungen vermieden oder zumindest verringert werden können, die darauf beruhen, dass aufgrund von Fehlern in der logistischen Kette der Materialbedarfsplanung an bestimmten Stellen des Produktionsprozesses kein Material mehr zur Verfügung steht. Dieser Vorteil fällt insbesondere bei der Serienproduktion, beispielsweise Fließbandfertigung von Kraftfahrzeugen, ins Gewicht.

Fahrerlose Transportfahrzeuge bzw. fahrerlose Transportsysteme (FTS) bieten eine robuste und effiziente Transportinfrastruktur, die ohne Weiteres auch für einen Einsatz in der Serienproduktion, beispielsweise in der Kraftfahrzeugindustrie, geeignet ist.

Dadurch, dass der Materialtransport zu den Entnahmeregalen im Rahmen der Erfindung fahrerlos erfolgt, können Personalkosten in erheblicher Größenordnung eingespart werden, so dass sich die Investitionskosten für ein entsprechendes System relativ schnell amortisieren.

Die Erfindung trägt damit wesentlich dazu bei, die Automatisierung in Produktionssystemen für die Serienproduktion insbesondere von Kraftfahrzeugen zu erhöhen. Das erfindungsgemäß vorgesehene FTF bzw. FTS bietet darüber hinaus Möglichkeiten, den Automatisierungsgrad in einer Serienproduktion von Kraftfahrzeugen weiter zu erhöhen. Bei entsprechender Ausgestaltung des Kommissionierplatzes bzw. der Kommissionierzone (Behälter-Lagerbereich) ist es beispielsweise möglich, auch die Übergabe von gefüllten Materialbehältern an das FTF automatisch zu gestalten. Auf diese Weise kann die logistische Kette bei der Material- Bedarfsplanung und -Nachlieferung weiter automatisiert werden, so dass auf diese Weise die Prozesssicherheit sowie die Ersparnisse an Personalkosten weiter erhöht werden können.

Entsprechend den jeweiligen Anforderungen kann erfindungsgemäß eine beliebige Anzahl von fahrerlosen Transportfahrzeugen verwendet werden. Die Navigation kann dabei mittels bekannter Navigationsverfahren erfolgen, beispielsweise mittels einer Koppelnavigation, einer Spurführung mit kontinuierlicher Leitlinie, einer Rasternavigation, einer Lasernavigation oder auch einer Funkpeilung.

Da fahrerlose Transportfahrzeuge für sich genommen allgemein bekannt sind, wird ihr allgemeiner Aufbau nachfolgend nicht näher erläutert.

Eine Weiterbildung der Erfindung sieht vor, dass das FTF von der zentralen Einrichtung per Funk, insbesondere über ein WLAN ansteuerbar ist oder angesteuert wird. Bei dieser Ausführungsform besteht insbesondere die Möglichkeit, die Ansteuerung des FTF oder der FTF in einem Produktionsbetrieb in die ohnehin vorhandene und zur Materialbedarfsplanung verwendete WLAN (Wireless Local Area Network) -Struktur einzubinden.

Eine andere Weiterbildung der Erfindung sieht vor, dass das FTF in eine Beladeposition in dem Behälter-lagerbereich steuerbar ist, in der das FTF mit Behältern beladbar ist oder beladen wird. Bei dieser Ausführungsform kann das FTF beispielsweise dann, wenn eine Transportfahrt zum Transportieren eines Materialbehälters oder mehrerer Materialbehälter zu den Entnahmeregalen ansteht, automatisch in die Beladeposition gesteuert und dort beladen werden.

In diesem Zusammenhang sieht eine zweckmäßige Weiterbildung der Erfindung vor, dass das FTF in der Beladeposition durch einen Logistiker beladbar ist oder beladen wird. Bei dieser Ausführungsform wird also der Beladevorgang des FTF in der Beladeposition manuell ausgeführt.

Die Mittel zur voll- oder teilautomatischen Beladung des FTF können entsprechend den jeweiligen Anforderungen in beliebiger geeigneter Weise ausgestaltet sein. Beispielsweise können an der Beladeposition des FTF Handhabungssysteme zur automatischen Handhabung von auf das FTF zu ladenden Behälter vorgesehen sein, die entsprechend den jeweiligen Anforderungen innerhalb weiter Grenzen wählbar sind.

Die erfindungsgemäß vorgesehenen Sensormittel können insbesondere so ausgebildet sein, wie in der DE 20 2007 0112 926 U1 beschrieben, deren Offenbarungsgehalt hiermit durch Bezugnahme vollinhaltlich in die vorliegende Anmeldung aufgenommen wird. Erfindungsgemäß können die Sensormittel dabei abfühlen, ob sich an einer vorbestimmten Stelle in der Ablaufbahn eines Entnahmeregales ein Materialbehälter befindet. Es ist erfindungsgemäß jedoch auch möglich, die Anwesenheit eines Materialbehälters an einer zu der Ablaufbahn entfernten Stelle des Entnahmeregales abzufühlen. Beispielsweise kann hierbei so vorgegangen werden, dass ein Werker einen leeren Materialbehälter an einer vorbestimmten Ablagefläche an einem Entnahmeregal abstellt und das Vorhandensein eines Materialbehälters an dieser Ablagefläche von den Sensormitteln abgefühlt wird. Eine vorteilhafte Weiterbildung der Erfindung sieht insoweit vor, dass die Sensormittel wenigstens einen optischen Sensor aufweisen. Beispielsweise und insbesondere kann der optische Sensor nach Art eines Lichttasters ausgebildet sein.

Eine andere Weiterbildung der Erfindung sieht vor, dass die Sensormittel wenigstens einen elektromechanisch arbeitenden Sensor aufweisen. Beispielsweise und insbesondere kann ein solcher elektromechanisch arbeitender Sensor so ausgebildet sein wie aus der DE 20 2007 01 2926 U1 bekannt.

Erfindungsgemäß können auch beliebige geeignete Sensorprinzipien miteinander kombiniert werden, um abzufühlen, ob sich an einer vorbestimmten Stelle des Entnehmeregales ein Behälter befindet. Erfindungsgemäß ist es in diesem Zusammenhang auch möglich, dass die Sensormittel die Anwesenheit eines Behälters an einer zu dem Entnahmeregal entfernten Ablagefläche abfühlen. Erfindungsgemäß kommt es ausschließlich darauf an, dass durch das Vorhandensein oder Nichtvorhandensein eines Behälters an einer vorbestimmten Stelle ein Materialbedarf angezeigt wird.

Eine vorteilhafte Weiterbildung der vorgenannten Ausführungsform sieht vor, dass wenigstens ein Entnahmeregal eine Ablaufbahn für Behälter aufweist und dass ein Fühler des elektromechanisch arbeitenden Sensors in die Ablaufbahn hineinragt. Auf diese Weise kann das Vorhandensein eines Behälters an einer vorbestimmten Stelle der Ablaufbahn besonders zuverlässig abgefühlt werden. Hinsichtlich des insoweit zugrundeliegenden Prinzips wird wiederum auf DE 20 2007 01 2926 U1 verwiesen. In gleichwirkender Weise können erfindungsgemäß die Sensormittel auch dann ein Bedarfsmeldesignal erzeugen, wenn sich an der vorbestimmten Stelle ein Materialbehälter befindet. Letztgenannte Variante ist besonders dann vorteilhaft, wenn das Vorhandensein eines Materialbehälters beispielsweise in der Ablaufbahn eines Entnahmeregales abgefühlt wird. Die Variante, ein Bedarfsmeldesignal dann zu erzeugen, wenn sich an der vorbestimmten Stelle kein Materialbehälter befindet, ist insbesondere dann vorteilhaft, wenn die Sensormittel beispielsweise nicht eine Ablaufbahn eines Entnahmeregales überwachen, sondern eine vorbestimmte Abladefläche, an der ein Werker einen leeren Behälter abstellt zum Zeichen, dass ein Materialbedarf besteht.

Eine andere vorteilhafte Weiterbildung der Erfindung sieht vor, dass eine Ablaufbahn eines Entnahmeregales als schiefe Ebene ausgebildet ist. Bei dieser Ausführungsform kann eine Mehrzahl von Behältern hintereinander auf der Ablaufbahn angeordnet sein, wobei immer dann, wenn der in Ablaufrichtung vorderste Behälter aus der Ablaufbahn entnommen wird, ein in Ablaufrichtung dahinter angeordneter Behälter nachrutscht.

Erfindungsgemäß ist es grundsätzlich möglich, dass zumindest einzelne Sensoren der Sensormittel leitungsgebunden mit der zentralen Einrichtung in Datenübertragungsverbindung stehen. Um die Anordnung von Sensoren der Sensormittel an den Entnahmeregalen besonders flexibel zu gestalten, sieht eine vorteilhafte Weiterbildung der Erfindung vor, dass die Sensormittel ein Bedarfsmeldesignal erzeugen, wenn sich an der vorbestimmten Stelle ein Materialbehälter befindet, wobei das Bedarfsmeldesignal drahtlos, insbesondere per Funk, zu einer zentralen Einrichtung zur Materialbedarfsplanung übertragbar ist oder übertragen wird. Die zentrale Einrichtung zur Materialbedarfsplanung kann erfindungsgemäß durch die zentrale Einrichtung des Produktionssystemes, beispielsweise einen Zentralrechner, gebildet sein. Es ist erfindungsgemäß jedoch auch möglich, im Rahmen des erfindungsgemäßen Produktionssystems eine gesonderte zentrale Einrichtung zur Materialbedarfsplanung, beispielsweise einen hierfür vorgesehenen Rechner, zu verwenden.

Die Erfindung sieht vor, dass eine Transportfahrt eines FTF in Abhängigkeit von wenigstens einem Bedarfsmeldesignal der Sensormittel und/oder wenigstens einem Bestandssteuerungssignal der zentralen Einrichtung ausführbar ist oder ausgeführt wird. Bei der zuerst genannten Alternative, bei der eine Transportfahrt eines FTF in Abhängigkeit von einem Bedarfsmeldesignal ausgelöst wird, findet eine Transportfahrt eines FTF immer dann statt, wenn an wenigstens einem Entnahmeregal ein Materialbedarf besteht. Durch entsprechende Ausgestaltung der Steuerung ist es erfindungsgemäß selbstverständlich möglich und sinnvoll, eine Transportfahrt erst dann durchzuführen, wenn eine ausreichende Anzahl von Materialanforderungen vorliegt und dementsprechend eine größere Anzahl von Behältern gleichzeitig transportiert werden soll, die Transportfahrt jedoch so rechtzeitig auszuführen, dass es an keinem Entnahmeregal zu einem Materialengpass kommt. Bei der zuletzt genannten Alternative, bei der eine Transportfahrt eines FTF in Abhängigkeit von wenigstens einem Bedarfsteuerungssignal der zentralen Einrichtung ausgeführt wird, kann die Steuerung des FTF unmittelbar mit einer Software zur Materialbedarfsplanung verknüpft werden und beispielsweise anhand eines empirisch ermittelten Materialverbrauches in dem Produktionsprozess der jeweilige Bestand an Bauteilen während des laufenden Produktionsprozesses abgeschätzt werden kann, wobei eine Transportfahrt eines FTF dann durchgeführt wird, wenn sich anhand der Schätzung ergibt, dass ein Materialbedarf besteht bzw. bevorsteht.

Eine andere vorteilhafte Weiterbildung der Erfindung, die sich auf die Beladung eines FTF bezieht, sieht in einem Beladebereich Scannermittel zum Scannen von Behältern vor, derart, dass Behälter vor dem Beladen des FTF gescannt werden. Auf diese Weise kann einerseits festgestellt werden, welche Behälter auf ein bestimmtes FTF geladen worden sind. Andererseits können nach dem Erfassen eines Behälters durch Scannen einem Logistiker, der den Behälter auf das FTF auflädt, Hilfsmittel hinsichtlich der Anordnung des Behälter an dem FTF bzw. zum positionsrichtigen Beladen des FTF gegeben werden.

Eine vorteilhafte Weiterbildung der vorgenannten Ausführungsform sieht vor, dass die Scannermittel wenigstens einen Scanner für eine optoelektronisch lesbare Schrift, insbesondere einen Barcode aufweisen. Bei dieser Ausführungsform kann jeder Behälter beispielsweise mit einem Barcode versehen sein, so dass die Behälter mittels eines Barcode-Scanner gescannt werden können. Ein Vorteil dieser Ausführungsform besteht darin, dass entsprechende Barcodescanner als relativ kostengünstige und störungssichere Standardbauteile zur Verfügung stehen und entsprechende Barcodeetiketten ebenfalls kostengünstig sowie an den Behältern leicht anbringbar sind. Eine andere vorteilhafte Weiterbildung der Erfindung sieht vor, dass die Scannermittel wenigstens eine Kamera aufweisen. Bei dieser Ausführungsform kann beispielsweise der Behälterinhalt eines Behälters mit einer Kamera fotografiert und anhand eines Stand- oder Bewegtbildes mit Verfahren der Bildverarbeitung und Mustererkennung erkannt werden, welchen Inhalt der Behälter hat. In Abhängigkeit von dem Ergebnis kann dann in der oben beschriebenen Weise festgestellt werden, dass ein bestimmter Behälter auf ein FTF aufgeladen worden ist, oder es können einem Logistiker, der den Behälter auflädt, Hilfsmittel zur hinsichtlich der Anordnung des Behälters an dem FTF positionsrichtigen Beladung gegeben werden.

Um einen Logistiker, der manuell Behälter auf ein FTF auflädt, bei der positionsrichtigen Beladung zu unterstützen, sieht eine andere vorteilhafte Weiterbildung der Erfindung in dem Beladebereich Anzeigemittel zur Visualisierung einer für den jeweiligen Behälter vorgesehenen Position an dem FTF vor. Beispielsweise kann auf einem Bildschirm, z.B. einem Touchscreen, das FTF abgebildet werden, beispielsweise auch in Form einer symbolhaften Darstellung, und es kann nach dem Scannen eines Behälters angezeigt werden, an welcher Position der jeweilige Behälter aufzuladen ist. Auf diese Weise sind Fehler vermieden oder zumindest verringert, die von einer fehlerhaften Beladung des FTF herrühren, so dass die Prozesssicherheit weiter verbessert ist.

Eine Weiterbildung der vorgenannten Ausführungsform sieht vor, dass die Anzeigemittel wenigstens einen Touchscreen aufweisen. Nach dem Aufladen eines Behälters auf ein FTF kann der Logistiker beispielsweise das Aufladen an dem Touchscreen bestätigen, so dass daran anschließend in Bezug auf einen nächsten Behälter die korrekte Position an dem FTF angezeigt wird. Auf diese Weise ist das manuelle Beladen eines FTF effizienter gestaltet.

Eine andere Weiterbildung der Erfindung sieht vor, dass die Anzeigemittel wenigstens eine nach Art eines Lichtzeigers ausgebildete Einrichtung aufweisen. Bei dieser Ausführungsform kann beispielsweise mittels eines beweglichen Lichtpunktes dem Logistiker angezeigt werden, an welcher Position an dem FTF ein gescannter Behälter aufzuladen ist. Eine andere außerordentlich vorteilhafte Weiterbildung der Erfindung sieht in Bezug auf die Beladung eines FTF Lokalisierungsmittel zur automatischen Identifizierung und/oder Lokalisierung von Behältern an dem FTF vor. Bei dieser Ausführungsform können die einzelnen Behälter nach dem Beladen des FTF lokalisiert werden, so dass kontrolliert werden kann, ob sich die richtigen Behälter auf dem FTF befinden und/ob sich die Behälter an der richtigen Stelle an dem FTF befinden.

Eine vorteilhafte Weiterbildung der vorgenannten Ausführungsform sieht vor, dass die Lokalisierungsmittel wenigstens eine Kamera und/oder wenigstens einen Scanner aufweisen. Auch bei dieser Ausführungsform kann beispielsweise der Beladezustand eines FTF mittels einer Kamera anhand eines Stand- oder Bewegtbildes unter Heranziehung von Verfahren der Bildverarbeitung und Mustererkennung überprüft werden.

Eine außerordentlich vorteilhafte Weiterbildung der Ausführungsform mit den Lokalisierungsmitteln sieht vor, dass dieselben ein Lesegerät für einen an dem jeweiligen Behälter angeordneten Transponder, insbesondere RFID-Transponder, aufweisen. Auf diese Weise ist die Erfassung und Lokalisierung der Behälter weiter vereinfacht.

Erfindungsgemäß kann die Beladung eines FTF in der Kommissionierzone weiterhin manuell erfolgen. Dies hat den Vorteil, dass die in einem Produktionssystem vorgesehene Kommissionierzone nicht verändert werden muss. Eine außerordentlich vorteilhafte Weiterbildung der Erfindung sieht jedoch in dem Beladebereich Belademittel zur teil- oder vollautomatischen Beladung von FTF mit gefüllten Behältern vor. Bei dieser Ausführungsform erfolgt somit auch die Beladung eines FTF in dem Beladebereich teil- oder vollautomatisch, so dass der Automatisierungsgrad in dem erfindungsgemäßen Produktionssystem weiter erhöht ist. Auf diese Weise ist die Prozesssicherheit und die Einsparung von Personalkosten weiter erhöht.

Erfindungsgemäß wird der Fahrweg eines FTF bzw. werden die Fahrwege mehrerer FTF automatisch gesteuert. Eine Fahrt eines FTF kann sofort dann beginnen, wenn die Beladung (manuelle oder automatische Beladung) abgeschlossen ist.

Eine andere vorteilhafte Weiterbildung der Erfindung sieht vor, dass das FTF Abgabemittel zur automatischen Abgabe von Behältern an Entnahmeregale in Abgabeposition des FTF aufweist.

Die Abgabemittel können erfindungsgemäß durch eine an dem FTF lokal vorgesehene Steuerung angesteuert werden und beispielsweise kann ein Abgabevorgang durch die lokale Steuerung des FTF dann ausgelöst werden, wenn festgestellt wird, dass sich das FTF in einer dafür vorgesehenen Abgabeposition vor einem Entnahmeregal befindet. Eine andere vorteilhafte Weiterbildung der Erfindung sieht jedoch vor, dass die Abgabemittel durch die zentrale Einrichtung ansteuerbar sind oder angesteuert werden. Bei dieser Ausführungsform übernimmt die zentrale Einrichtung somit auch die Steuerung des Abgabevorgangs zur Abgabe eines Behälters von einem FTF an ein Entnahmeregal.

Grundsätzlich können die Abgabemittel als aktive Abgabemittel ausgebildet sein, beispielsweise als an dem FTF angeordnete Handhabungseinrichtung. Um das FTF einfach und damit kostengünstig zu halten und gleichzeitig den Energieverbrauch, der bei einem FTF in der Regel durch eine Batterie gedeckt wird, niedrig zu halten, sieht eine außerordentlich vorteilhafte Weiterbildung der Erfindung vor, dass die Abgabemittel als passive Abgabemittel ausgebildet sind. Dabei wird unter einem passiven Abgabemittel erfindungsgemäß ein Abgabemittel verstanden, das nicht über einen eigenen Antrieb verfügt und damit einen Behälter nicht selbständig abgeben kann. Beispielsweise und insbesondere kann ein passives Abgabemittel dadurch gebildet sein, dass ein Behälter auf einer schiefen Ebene angeordnet ist und nach entsprechender Freigabe und der Wirkung der Schwerkraft abgegeben wird. Demgegenüber verfügt ein aktives Abgabemittel im Sinne der Erfindung über einen eigenen Antrieb und kann damit einen Behälter selbstständig aufnehmen und abgeben. Ein solches aktives Abgabemittel kann beispielsweise nach Art eines Handhabungsgerätes oder als Lastgabel ausgebildet sein.

Die Anordnung von zu transportierenden Behältern an einem FTF kann in beliebiger und geeigneter Weise bzw. Anordnung erfolgen.

Eine vorteilhafte Weiterbildung der Erfindung sieht insoweit vor, dass die Abgabemittel an dem FTF wenigstens einen Abgabeschacht aufweisen, an dem an wenigstens zwei Positionen hintereinander Behälter angeordnet sind oder werden können. Dabei ist die Anzahl von in einem Abgabeschacht hintereinander angeordneten Behältern ausschließlich durch die Dimensionen des FTF begrenzt.

Eine vorteilhafte Weiterbildung der Ausführungsform mit dem Abgabeschacht sieht vor, dass an dem FTF wenigstens zwei Abgabeschächte nebeneinander angeordnet sind und/oder dass an dem FTF wenigstens zwei Abgabeschächte übereinander angeordnet sind. Durch entsprechende Gestaltung des FTF können bei dieser Ausführungsform eine große Anzahl von Materialbehältern transportiert werden, die an den einzelnen Positionen in den Abgabeschächten hintereinander sowie entsprechend der Anordnung der Abgabeschächte auch nebeneinander und übereinander angeordnet sein können. Die Anzahl von mittels eines FTF transportierbaren Behältern ist damit ausschließlich durch die Dimensionen des FTF begrenzt.

Eine andere vorteilhafte Weiterbildung der Ausführungsform mit dem Abgabeschacht bzw. den Abgabeschächten sieht vor, dass wenigstens ein Abgabeschacht als schiefe Ebene ausgebildet ist. Bei dieser Ausführungsform kann die Abgabe eines Behälters an ein Entnahmeregal passiv unter Ausnutzung der Schwerkraft, erfolgen, so dass der Energiebedarf für einen Abgabevorgang äußerst gering ist.

Um bei der vorgenannten Ausführungsform die Reibung zwischen dem Behälterboden und einer Auflagefläche des Abgabeschachtes möglichst gering zu halten und damit eine Abgabe des Behälters zu erleichtern, sieht eine vorteilhafte Weiterbildung vor, dass wenigstens ein Abgabeschacht als Rollenbahn ausgebildet ist.

Eine andere außerordentlich vorteilhafte Weiterbildung der Erfindung sieht vor, dass jedem Abgabeschacht wenigstens ein Sperrelement zugeordnet ist, das aus einer Sperrposition, in der der Schacht gegen eine Abgabe der Behälter gesperrt ist, und einer Abgabeposition beweglich ist, in der der Schacht für eine Abgabe der Behälter freigegeben ist. Diese Ausführungsform stellt beispielsweise in Kombination mit der Ausführungsform, bei der der Abgabeschacht als schiefe Ebene ausgebildet ist, ein passives Abgabemittel bereit, dass zu seiner Betätigung nur einen äußerst geringen Energiebedarf hat. Das Sperrelement kann beispielsweise durch einen elektromechanisch betätigten Riegel gebildet sein, der in der Sperrposition einen Abgabeweg für die in dem Abgabeschacht angeordneten Behälter sperrt und zur Abgabe der Behälter elektromechanisch zurückgezogen wird, beispielsweise mittels eines Elektromagneten. Der Antrieb für das Sperrelement ist dabei innerhalb weiter Grenzen wählbar. Wenn das Sperrelement als mechanischer Riegel ausgebildet ist, so kann ein Antrieb verwendet werden, der nur einen äußerst geringen Energiebedarf hat.

Sofern ein Abgabeschacht eines erfindungsgemäßen FTF ausschließlich "sortenrein", also mit Behältern beladen wird, die die gleichen Bauteile beinhalten, so ist es erfindungsgemäß bei der vorgenannten Ausführungsform grundsätzlich ausreichend, dass einem Abgabeschacht nur ein einzelnes Sperrelement zugeordnet ist, so dass sämtliche in dem Abgabeschacht aufgenommenen Behälter zusammen abgegeben werden, wenn das Sperrelement in die Abgabeposition bewegt wird. Wenn sämtliche Abgabeschächte oder zumindest ein Abgabeschacht nicht "sortenrein", also mit Behältern beladen wird, die unterschiedliche Bauteile enthalten und die damit in der Regel nicht zusammen abgegeben sollen, so sieht eine außerordentlich vorteilhafte Weiterbildung der Erfindung vor, dass dem Abgabeschacht Vereinzelungsmittel zur einzelnen Abgabe von Behältern aus dem Abgabeschacht zugeordnet sind. Auf diese Weise ist es erfindungsgemäß ermöglicht, auch einzelne Behälter aus dem Abgabeschacht abzugeben. Dies ist nicht nur bei einer nicht "sortenreinen" Beladung eines Abgabeschachtes von Vorteil, sondern auch dann, wenn in einem Abgabeschacht eine Mehrzahl von Behältern aufgenommen ist, von denen nur ein einzelner oder einzelne an ein Entnahmeregal abgegeben werden sollen, die anderen jedoch an ein anderes Entnahmeregal oder andere Entnahmeregale.

Um Störungen zu vermeiden bzw. zu erkennen, die bei der Abgabe eines Behälters an ein Entnahmeregal auftreten können, sieht eine andere vorteilhafte Weiterbildung Sensormittel vor, die abfühlen, ob eine Abgabe eines Behälters an eine Entnahmeregal erfolgreich verlaufen ist. Beispielsweise und insbesondere kann mit einem optischen oder elektromechanischen Sensor abgefühlt werden, ob ein abzugebender Behälter tatsächlich an das Entnahmeregal abgegeben worden ist oder sich zwischen FTF und Entnahmeregal befindet, sich beispielsweise verkeilt hat. Durch eine entsprechende Sensorik lassen sich derartige Störungsfälle bei Betrieb des erfindungsgemäßen Produktionssystems schnell erkennen und beseitigen, so dass die Prozesssicherheit weiter erhöht ist.

Sofern in dem Behälter-Lagerbereich Mittel zur teil- oder vollautomatischen Übergabe von Behältern an ein FTF vorgesehen sind, so können diese Mittel entsprechend den jeweiligen Anforderungen ausgestaltet sein. Eine außerordentlich vorteilhafte Weiterbildung der Erfindung sieht insoweit vor, dass in dem Behälter-Lagerbereich wenigstens ein Abgabeschacht zur Übergabe von gefüllten Behältern an wenigstens ein FTF angeordnet ist. Ein solcher Abgabeschacht kann so ausgestaltet und weitergebildet sein, wie dies vorstehend für einen an einem FTF angeordneten Abgabeschacht beschrieben worden ist.

Erfindungsgemäß ist es möglich, dass FTF mit einer bordeigenen Steuerungseinrichtung auszustatten, die insbesondere Bestandteile des FTF zur Aufnahme und Abgabe von Behältern ansteuert. Um das bzw. die in einem Produktionssystem verwendete bzw. verwendeten FTF besonders einfach und kostengünstig zu gestalten, sieht eine vorteilhafte Weiterbildung der Erfindung vor, dass die in die Bereitstellung und den Transport von Behältern eingebundenen Bestandteile des Produktionssystems durch die zentrale Einrichtung ansteuerbar sind oder angesteuert werden. Bei dieser Ausführungsform ist soweit wie möglich die Steuerungslogik in die zentrale Einrichtung, beispielsweise einen Zentralrechner verlagert, so dass die Steuerungslogik dezentraler Komponenten oder Bestandteile des Produktionssystems soweit wie möglich reduziert werden kann.

Eine andere außerordentlich vorteilhafte Weiterbildung der Erfindung sieht vor, dass wenigstens ein FTF zur Aufnahme von Leerbehältern an den Entnahmeregalen ausgebildet ist. Bei dieser Ausführungsform transportiert das FTF bzw. transportieren die FTF nicht nur gefüllte Behälter zu den Entnahmeregalen, sondern auch Leerbehälter von den Entnahmeregalen zurück in den Behälter-Lagerbereich, so dass auch hinsichtlich der Abholung und Bereitstellung von Leerbehältern die logistische Kette vollständig geschlossen ist.

Eine Weiterbildung der vorgenannten Ausführungsform sieht an wenigstens einem Entnahmeregal wenigstens einen Abgabeschacht zur automatischen Abgabe von Leerbehältern an ein FTF vor. Ein solcher Abgabeschacht kann so ausgestaltet und weitergebildet sein, wie dies vorstehend für einen an den FTF angeordneten Abgabeschacht beschrieben worden ist. Auf diese Weise ist die für die Abgabe von Leerbehältern an ein FTF erforderliche vorrichtungsmäßige Infrastruktur besonders einfach und kostengünstig gestaltet. Es kommt hinzu, dass entsprechende im wesentlichen baugleiche Abgabeschächte sowohl an einem FTF (zur Abgabe von gefüllten Behältern an ein Entnahmeregal) als auch in einem Behälter-Lagerbereich (zur Abgabe von gefüllten Behältern an ein FTF) und an einem Entnahmeregal (zur Abgabe von Leerbehältern an ein FTF) verwendet werden können, so dass insoweit die verwendeteten Baugruppen identisch oder sehr ähnlich sind. Der sich dadurch ergebende modulare Aufbau wirkt sich kostensenkend auf ein erfindungsgemäßes Produktionssystem aus.

Die von einem FTF zurücktransportierten Leerbehälter können erfindungsgemäß grundsätzlich manuell von dem FTF abgeladen werden. Um auch an dieser Stelle die logistischen Abläufe zu automatisieren, sieht eine vorteilhafte Weiterbildung der Erfindung vor, dass in einem Leerbehälter-Übergabebereich Aufnahmemittel zur voll- oder teilautomatischen Aufnahme von durch ein FTF bereitgestellten Leerbehältern vorgesehen sind.

Um beispielsweise in einer Leitzentrale des Produktionssystems ständig über die jeweilige Position eines oder jedes FTF informiert zu sein, sieht eine andere vorteilhafte Weiterbildung Mittel zur Positionsermittlung und/oder Visualisierung wenigstens eines FTF vor. Auf diese Weise können Störungen, die beispielsweise dadurch entstehen, dass der Fahrweg eines FTF blockiert ist, schnell erkannt und behoben werden. Falls ein gestörtes FTF den Fahrweg blockiert, so kann beispielsweise eine Steuerungssoftware der zentralen Einrichtung alternative Fahrwege für weitere FTF angeben. Es ist erfindungsgemäß auch möglich, ein "Notfall-FTF" vorzusehen, das im Falle einer Störung beispielsweise eines Liegenbleibens eines FTF, statt des liegengebliebenden FTF eingesetzt wird, um - ggf. auf einem alternativen Fahrweg - anstelle des liegengebliebenen FTF Material zu den benötigten Stellen zu liefern.

Gegenstand der Erfindung ist auch ein Verfahren zum Betreiben eines Produktionssystems für die Serienproduktion insbesondere von Kraftfahrzeugen, bei dem wenigstens ein FTF verwendet wird, um Behälter zwischen einem Behälter-Lagerbereich und Entnahmeregalen zu transportieren, wobei das FTF derart eingerichtet und ausgebildet ist, dass Behälter automatisch an Entnahmeregale abgebbar sind oder abgegeben werden. Das erfindungsgemäße Verfahren kann so weitergebildet werden, wie dies in den Unteransprüchen für das erfindungsgemäße Produktionssystem bzw. das erfindungsgemäße FTF beschrieben worden ist.

Gegenstand der Erfindung ist ferner die Verwendung eines FTF zum automatischen Transport von Behältern zwischen einem Behälter-Lagerbereich eines Produktionssystems und Entnahmeregalen und zur automatischen Abgabe von Behältern an Entnahmeregalen. Soweit technisch möglich bzw. sinnvoll, beziehen sich im Kontext der Erfindung beschriebene Weiterbildungen des Produktionssystems auch auf das erfindungsgemäße FTF und umgekehrt.

Soweit in den Patentansprüchen oder der Beschreibung das Wort "ein" verwendet worden ist, handelt es sich um einen umbestimmten Artikel und nicht um ein Zahlwort. Dementsprechend können die Bestandteile des erfindungsgemäßen Produktionssystems entsprechend den Anforderungen des jeweiligen Anwendungsfalles in beliebiger Anzahl und Ausgestaltung vorgesehen sein.

Die Erfindung wird nachfolgend anhand der beibefügten Zeichnung näher erläutert, in der schematisch und skizzenartig ein Auführungsbeispiel eines erfindungsgemäßen Produktionssystems dargestellt ist.

Es zeigt:
- FIG. 1: stark schematisiert und skizzenartig eine Topologie eines erfindungsgemäßen Produktionssystems 2.
- FIG. 2: schematisiert eine Ansicht von hinten auf ein Ausführungsbeispiel eines erfindungsgemäßen FTF,
- FIG. 3: das FTF gemäß Figur 2 in einer Seitenansicht,
- FIG. 4: in einer Ansicht von vorne ein Sperrelement eines erfindungsgemäßen FTF in seiner Sperrposition,
- FIG. 5: in gleicher Darstellung wie Figur 4 das Sperrelement in seiner Abgabeposition,
- FIG. 6: in gleicher Darstellung wie Figur 2 ein Ausführungsbeispiel eines Entnahmeregales des Produktionssystems gemäß Figur 2 und
- FIG. 7: eine Seitenansicht des Entnahmeregales gemäß Figur 6.

Die Zeichnung ist stark schematisiert und auf die für das Verständnis für die Erfindung wesentlichen Elemente erheblich detailreduziert.

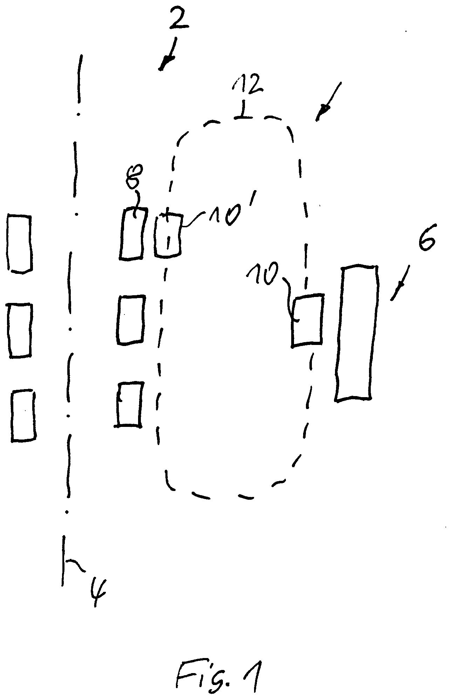

In Figur 1 ist stark schematisiert ein Produktionssystem 2 für die Serienproduktion insbesondere von Kraftfahrzeugen dargestellt, das ein in Figur 1 durch eine strichpunktierte Linie 4 symbolisiertes Fließband aufweist.

In der Serienproduktion von Kraftfahrzeugen werden sogenannte A-, B-, und C-Teile verwendet, wobei es sich bei C-Teilen um Schüttgut ohne besonderen Wert handelt. Insbesondere derartige C-Teile werden in Materialbehältern, die nachfolgend auch kurz als Behälter bezeichnet werden, angeliefert. Das Produktionssystem 2 weist einen Behälter-Lagerbereich 6 zur Lagerung von Behältern auf, die für die Produktion bestimmte Bauteile enthalten. Entfernt von dem Behälter-Lagerbereich 6 sind beiderseits des Fließbandes 4 Entnahmeregale angeordnet, aus dem Werker Behälter mit Bauteilen entnehmen können. In Figur 1 ist lediglich ein Entnahmeregal exemplarisch mit dem Bezugszeichen 8 versehen.

Eine wesentliche logistische Aufgabe besteht darin, in dem Produktionssystem 2 dafür zu sorgen, dass an den Entnahmeregalen 8 stets eine ausreichende Anzahl von Behältern mit für die Produktion benötigten Bauteilen zur Verfügung steht. Eine logistische Teilaufgabe besteht darin, mit Bauteilen gefüllte Behälter von dem Behälter-Lagerbereich 6 zu den Entnahmeregalen 8 zu transportieren und dabei entsprechend dem Bedarf an Bauteilen an den einzelnen Entnahme-Regalen 8 die entsprechenden Behälter zu liefern. Zum Transport von Behältern von dem Behälter-Lagerbereich 6 zu den Entnahmeregalen 8 sind Transportmittel vorgesehen, die erfindungsgemäß im Rahmen eines fahrerlosen Transportsystemes (FTS) wenigstens ein fahrerloses Transportfahrzeug (FTF) aufweisen. In Figur 1 ist rein symbolisch ein einzelnes FTF angedeutet und mit dem Bezugszeichen 10 versehen. Entsprechend den jeweiligen Anforderungen kann in dem Produktionssystem 2 jedoch eine Vielzahl von FTF vorgesehen sein.

Erfindungsgemäß ist wenigstens ein FTF 10 derart eingerichtet und ausgebildet, dass Behälter automatisch an die Entnahmeregale 8 abgebbar sind oder abgegeben werden.

Das FTF 8 wird von einer zentralen Einrichtung, beispielsweise einem zentralen Leitrechner, durch den alle logistischen Vorgänge innerhalb des Produktionssystemes koordiniert werden, per Funk angesteuert, wobei die Funkverbindung bei dem dargestellten Ausführungsbeispiel über ein WLAN hergestellt ist.

Das FTF 10 ist in dem Behälter-Lagerbereich 6 in eine Beladeposition steuerbar, die in Figur 1 gezeigt ist und in der das FTF 10 mit gefüllten Behältern beladen wird. Die Beladung des FTF 10 mit gefüllten Behältern kann manuell durch einen Logistiker erfolgen. Diese Ausführungsform hat den Vorteil, dass der Behälter-Lagerbereich 6 nicht verändert werden muss, um die Erfindung zu benutzen. Erfindungsgemäß können jedoch in dem Beladebereich auch Mittel zur voll- oder teilautomatischen Beladung des FTF 10 mit gefüllten Behältern vorgesehen sein. Diese Mittel können erfindungsgemäß beispielsweise durch ein Handhabungsgerät oder auf andere Weise ausgebildet sein.

Um einen Bedarf an Bauteilen an einem der Entnahmeregale 8 zu melden, sind an wenigstens einem Entnahmeregal 8 Sensormittel vorgesehen, die abfühlen, ob sich an einer vorbestimmten Stelle des Entnahmeregales ein Behälter befindet. Die Sensormittel können beispielsweise einen optischen Sensor oder wenigstens einen elektromechanisch arbeitenden Sensor aufweisen, wie er beispielsweise aus der DE 20 2007 012926 U1 bekannt ist, deren Inhalt hiermit durch Bezugnahme vollinhaltlich in die vorliegende Anmeldung aufgenommen wird.

An den einzelnen Entnahmeregalen 8 ist jeweils eine Ablaufbahn gebildet, die insbesondere als Rollenbahn und als schiefe Ebene ausgebildet sein kann und auf der Behälter ablaufen, in denen die für die Serienfertigung benötigten Bauteile aufgenommen sind. Hierbei enthalten Behälter, die auf derselben Ablaufbahn angeordnet und damit in demselben Entnahmeregal angeordnet sind, in der Regel die gleichen Bauteile.

Hinsichtlich eines Ausführungsbeispieles eines elektromechanisch arbeitenden Sensors der Sensormittel wird wiederum auf die DE 20 2007 012926 U1 verwiesen, in der gezeigt und beschrieben ist, dass ein Fühler eines elektromechanisch arbeitenden Sensors in die Ablaufbahn hineinragt, um abzufühlen, ob sich an der Stelle, an der sich der Sensor befindet, aktuell ein Materialbehälter befindet. Es ist jedoch auch möglich, dass ein Werker einen leeren Materialbehälter an einer dafür vorgesehenen Ablagefläche abstellt und dass durch entsprechende Sensormittel festgestellt wird, ob sich an dieser Ablagefläche aktuell ein Behälter befindet und dementsprechend ein Bedarf für eine Nachlieferung von Bauteilen besteht.

Die Sensormittel können erfindungsgemäß ein Bedarfsmeldesignal erzeugen, wenn sich an der vorbestimmten Stelle, also beispielsweise an dem Entnahmeregal, kein Behälter befindet. Dabei wird das Bedarfsmeldesignal per Funk zu der zentralen Einrichtung zur Materialbedarfsplanung übertragen. An der zentralen Einrichtung läuft damit eine Vielzahl von Signalen zusammen, die einen Bedarf an unterschiedlichen Bauteilen an unterschiedlichen Stellen des Produktionsprozesses signalisieren.

In Figur 1 ist durch eine gestrichelte Linie 12 ein Fahrweg des FTF 10 symbolisiert, wobei dieser Fahrweg in einer Schleife von dem Behälter-Lagerbereich 6 zu den Entnahmeregalen 8 führt. Entsprechend den jeweiligen Anforderungen können erfindungsgemäß beliebige Fahrwege vorgesehen sein. Die Art und Weise, wie ein FTF entlang eines vorbestimmten Fahrweges fährt und hierbei angesteuert wird, ist dem Fachmann allgemein bekannt und wird daher hier nicht näher erläutert.

Eine Transportfahrt des FTF kann erfindungsgemäß beispielsweise in Abhängigkeit von wenigstens einem Bedarfsmeldesignal der an den Entnahmeregalen vorgesehenen Sensormittel ausgelöst werden. Die logistische Aufgabe, Material in Behältern so rechtzeitig zu den Entnahmeregalen zu transportieren, dass dort stets eine ausreichende Anzahl der benötigten Bauteile zur Verfügung steht, gleichzeitig jedoch Transportfahrten des FTF möglichst ökonomisch zu gestalten, indem beispielsweise während einer Transportfahrt unterschiedliche Entnahmeregale 8 angefahren und dort Behälter mit unterschiedlichen Materialien abgeliefert werden, wird durch eine entsprechende Steuerung in der zentralen Einrichtung gelöst.

Es ist erfindungsgemäß jedoch auch möglich, eine Transportfahrt des FTF in Abhängigkeit von wenigstens einem Bedarfssteuerungssignal der zentralen Einrichtung zur Materialbedarfsplanung auszulösen. Hierbei kann beispielsweise der Materialbedarf an den einzelnen Stellen des Produktionsprozesses und damit an den einzelnen Entnahmeregalen entsprechend dem Fortschritt des Produktionsprozesses geschätzt werden, wobei entsprechend der Schätzung - ggf. notfalls unter Zugrundelegen einer Sicherheitsreserve - Bauteile in entsprechenden Behältern zu den einzelnen Entnahmeregalen 8 geliefert werden.

Erfindungsgemäß kann eine Bedarfssteuerung dadurch angetriggert werden, dass ein Logistiker von Zeit zu Zeit an den einzelnen Entnahmeregalen prüft, ob noch eine ausreichende Anzahl von Bauteilen zur Verfügung steht. Ein Materialbedarf kann der zentralen Einrichtung dann durch geeignete technische Mittel mitgeteilt werden, beispielsweise über Materialbedarfskarten, die an den einzelnen Entnahmeregalen vorgesehen sind und zur Anzeige eines Materialbedarfs entnommen und an die zentrale Einrichtung übermittelt werden können.

Erfindungsgemäß können in einem Produktionssystem auch die zuvor beschriebenen Arten einer Bedarfsmeldung an die zentrale Einrichtung miteinander und ggf. auch noch mit weiteren Verfahren zur Bedarfsmeldung kombiniert werden.

Das FTF 10 wird in dem Beladebereich mit gefüllten Behältern beladen, wobei der Beladebereich beispielsweise und insbesondere in dem Behälter-Lagerbereich gebildet sein kann.

In dem Beladebereich werden gefüllte Behälter vor dem Beladen des FTF 10 gescannt, wobei zu diesem Zweck in dem Beladebereich Scannermittel zum Scannen der Behälter vorgesehen sind. Bei dem dargestellten Ausführungsbeispiel weisen die Scannermittel einen Scanner für eine optoelektronisch lesbare Schrift, und zwar einen Barcode, auf. Die gefüllten Behälter können zum Zwecke ihrer Erfassung vor dem Beladen des FTF jedoch auch auf andere Weise gescannt werden. Beispielsweise können die Scannermittel wenigstens eine Kamera aufweisen.

Im Rahmen des erfindungsgemäßen Verfahrens kann somit beispielsweise an jedem Behälter ein Barcode angebracht sein. Der Barcode kann dabei dauerhaft an dem Behälter angebracht sein, wenn in diesem Behälter stets die gleichen Teile transportiert werden. Es ist jedoch auch möglich, in ein und demselben Behälter bei unterschiedlichen Transportfahrten des FTF unterschiedliche Bauteile zu transportieren. Dann wird an jedem Behälter entsprechend seinem Inhalt jeweils ein individueller Barcode angebracht. Mit dem Scannen ist der jeweilige Behälter erfasst und kann auf das FTF 10 geladen werden.

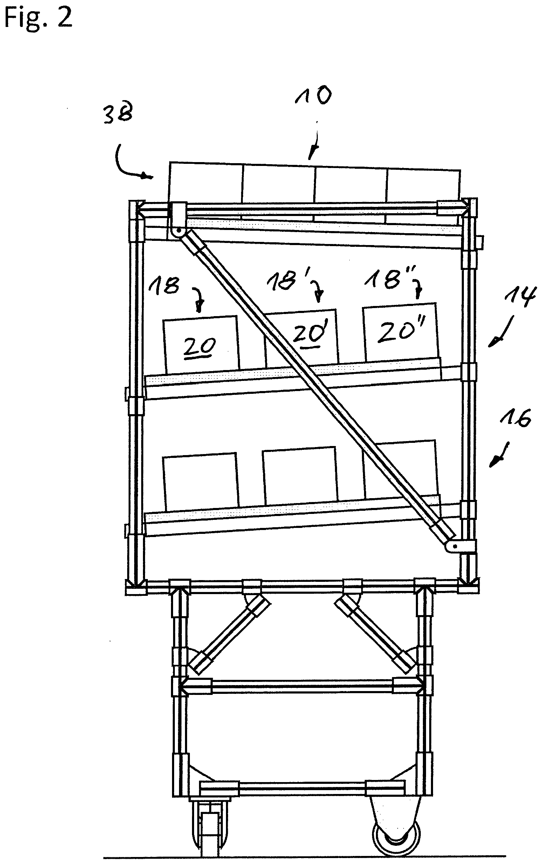

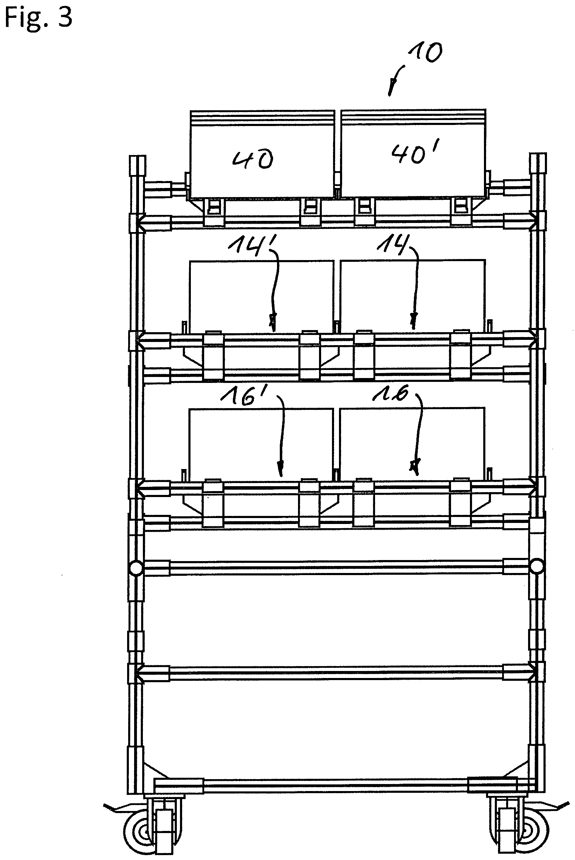

Anhand der Figuren 2 und 3 wird nachfolgend der Aufbau eines Ausführungsbeispieles eines erfindungsgemäßen FTF näher erläutert.

Figur 2 zeigt eine Rückansicht des FTF 10. Erfindungsgemäß ist das FTF 10 derart eingerichtet und ausgebildet, dass Behälter automatisch an den Entnahmeregalen 8 abgegeben werden können.

Die zentrale Einrichtung steuert das FTF 10 nach erfolgter Beladung desselben derart an, dass das FTF 10 von der Beladeposition zu einer durch die zentrale Einrichtung vorgegebenen Abgabeposition fährt zur Abgabe von geladenen gefüllten Behältern an wenigstens ein Entnahmeregal 8.

Bei dem dargestellten Ausführungsbeispiel sind die Abgabemittel als passive Abgabemittel ausgebildet und werden von der zentralen Einrichtung angesteuert.

Die Abgabemittel an dem FTF 10 weisen wenigstens einen Abgabeschacht auf, an dem an wenigstens zwei Positionen hintereinander Behälter angeordnet werden können. Aus Figur 2 ist ersichtlich, dass bei dem dargestellten Ausführungsbeispiel zwei Abgabeschächte 14,16 übereinander angeordnet sind. Aus Figur 3 ist ersichtlich, dass neben dem Abgabeschacht 14 ein weiterer Abgabeschacht 14' und neben dem Abgabeschacht 16 ein weiterer Abgabeschacht 16' angeordnet sind. Nachfolgend wird ausschließlich der Abgabeschacht 14 näher beschrieben. Die Abgabeschächte 16 sowie 14' und 16' sind entsprechend aufgebaut und werden daher hier nicht näher erläutert.

Wie aus Figur 2 ersichtlich, ist der Abgabeschacht 14 als schiefe Ebene ausgebildet. Um eine Abgabe von Behältern aus dem Abgabeschacht 14 zu fördern, ist der Abgabeschacht 14 ferner als Rollenbahn ausgebildet.

Wie ferner aus Figur 2 ersichtlich ist, sind in dem Abgabeschacht 14 an drei Positionen 18,18',18" hintereinander Behälter 20,20',20" angeordnet. Die Anzahl der Positionen 18,18'18" pro Abgabeschacht 14 ist entsprechend dem jeweiligen Anforderungen innerhalb weiter Grenzen wählbar. Gleichermaßen ist die Anzahl von nebeneinander angeordneten Abgabeschächten 14,14' bzw. 16,16' und die Anzahl der übereinander angeordneten Abgabeschächten 14,16 bzw. 14',16' innerhalb weiter Grenzen wählbar. Letztendlich ist die Anzahl von Positionen 18, an denen das FTF 10 mit einem Behälter 20 beladen werden kann, ausschließlich von den Dimensionen des FTF 10 abhängig.

Erfindungsgemäß ist jedem Abgabeschacht 14 wenigstens ein Sperrelement zugeordnet, das aus einer Sperrposition, in der der Abgabeschacht 14 gegen eine Abgabe von Behältern gesperrt ist, und einer Abgabeposition beweglich ist, in der der Abgabeschacht für eine Abgabe von Behältern freigegeben ist.

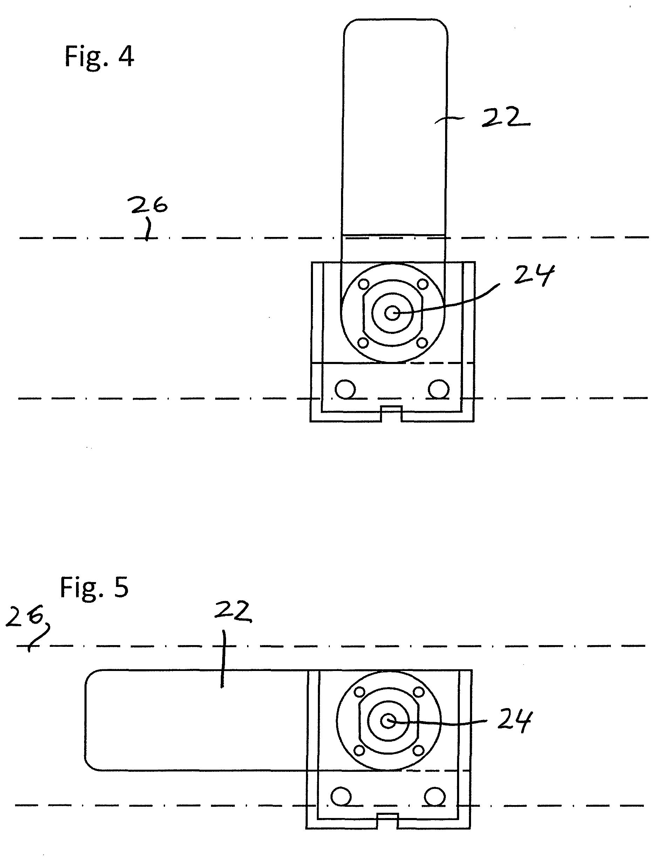

Ein Ausführungsbeispiel eines solchen Sperrelementes ist in den Figuren 4 und 5 dargestellt, wobei Figur 4 das Sperrelement in seiner Sperrposition und Figur 5 das Sperrelement in seiner Abgabeposition darstellt.

Das Sperrelement ist bei diesem Ausführungsbeispiel als Riegel 22 ausgebildet, der mittels eines elektromotorischen Drehantriebs um eine Schwenkachse 24 verschwenkbar ist. In der in Figur 4 dargestellten Sperrposition ragt der Riegel in den Abgabeschacht 14 hinein, so dass dieser gegen eine Abgabe von Behältern gesperrt ist. Um Behälter aus dem Abgabeschacht 14 abgeben zu können, wird der Riegel 22 mittels des zugeordneten elektromotorischen Drehantriebs in die in Figur 5 dargestellte Abgabeposition verschwenkt, in der der Abgabeschacht 14 für eine Abgabe der Behälter 20,20',20" freigegeben ist. Die Ansteuerung des elektromotorischen Drehantriebs des Riegels 22 kann entsprechend den jeweiligen Anforderungen durch die zentrale Einrichtung oder durch eine an dem FTF 10 vorgesehene Steuerung gesteuert werden.

Falls der Abgabeschacht 14 "sortenrein", also ausschließlich mit Behältern, die die gleichen Bauteile enthalten, beladen wird, so ist es erfindungsgemäß ausreichend, wenn dem Abgabeschacht 14 ein einzelnes Sperrelement 22 zugeordnet ist, das an dem in Abgaberichtung vorderen Ende des Abgabeschachtes 14, also an dem in Figur 2 linken Ende des Abgabeschachtes 14 angeordnet ist.

Um auch eine nicht "sortenreine" Beladung zu ermöglichen, bei der in dem Abgabeschacht 14 Behälter angeordnet werden, die unterschiedliche Bauteile enthalten, sind bei dem dargestellten Ausführungsbeispiels Vereinzelungsmittel zur einzelnen Abgabe von Behältern aus dem Abgabeschacht 14 zugeordnet. Die Vereinzelungsmittel sind dadurch gebildet, dass den einzelnen Positionen 18,18',18" des Abgabeschachtes 14 jeweils ein Sperrelement zugeordnet ist, wie es in den Figuren 4 und 5 dargestellt ist. Die den Positionen 18,18',18" zugeordneten Sperrelemente sind dabei unabhängig voneinander ansteuerbar.

Die Beladung eines FTF 10 vollzieht sich wie folgt:
Zur Beladung wird das FTF 10 in eine Beladeposition gesteuert, in der es beispielsweise vor dem Behälter-Lagerbereich 6 angeordnet ist. Ein Logistiker entnimmt aus dem Behälter-Lagerbereich 6 Behälter, die auf das FTF 10 geladen werden sollen. Zunächst wird dabei der an jedem Behälter vorgesehene Barcode gescannt. Um die Beladung zu erleichtern, sind in dem Beladebereich Anzeigemittel zur Visualisierung einer für den jeweiligen Behälter vorgesehenen Position an dem FTF 10 vorgesehen.

Bei dem dargestellten Ausführungsbeispiel weisen die Anzeigemittel einen Touchscreen auf, an der symbolisch das FTF 10 dargestellt wird. Nach dem Scannen des Barcodes eines Behälters wird auf dem Touchscreen angezeigt, an welcher Position in welchem der Abgabeschächte des FTF 10 der Behälter positioniert werden soll. Der Logistiker setzt den Behälter daran anschließend an die angezeigte Position und quittiert den so vorgenommenen Teil-Ladevorgang auf dem Touchscreen.

Daraufhin kann ein weiterer Behälter gescannt und auf das FTF 10 geladen werden. Dieser Teil-Beladevorgang wiederholt sich so oft, bis sämtliche von dem FTF 10 bei der anstehenden Transportfahrt zu transportierenden Behälter auf das FTF 10 geladen sind bzw. alle Positionen des FTF 10 mit Behältern besetzt sind.

Die Verteilung von Behältern auf ein FTF 10 oder eine Mehrzahl von FTF wird durch die zentrale Einrichtung gesteuert.

Anstatt mittels eines Barcodes oder einer anderen optoelektronisch lesbaren Schrift können die auf das FTF 10 zu ladenden Behälter auch auf andere Weise identifiziert werden. Beispielsweise können die Behälter mittels einer Kamera gescannt werden, oder die einzelnen Behälter können mit einem Transponder, beispielsweise einem RFID-Transponder, versehen sein. Um die Anordnung der Behälter an dem FTF 10 zu überprüfen, können Lokalisierungsmittel zur automatischen Identifizierung und/oder Lokalisierung von Behältern an dem FTF 10 vorgesehen sein. Bei einer Ausführungsform, bei der die einzelnen Behälter mit einem RFID-Transponder versehen sind, können diese Lokalisierungsmittel ein Lesegerät für den an den jeweiligen Behälter angeordneten Transponder aufweisen. Auf diese Weise kann die korrekte Beladung des FTF 10 mit Behältern überprüft werden.

Nach erfolgter Beladung steuert die zentrale Einrichtung das FTF 10 derart an, dass das FTF von der Beladeposition zu einer durch die zentrale Einrichtung vorgegebenen Abgabeposition fährt zur Abgabe von geladenen und gefüllten Behältern an wenigstens ein Entnahmeregal 8.

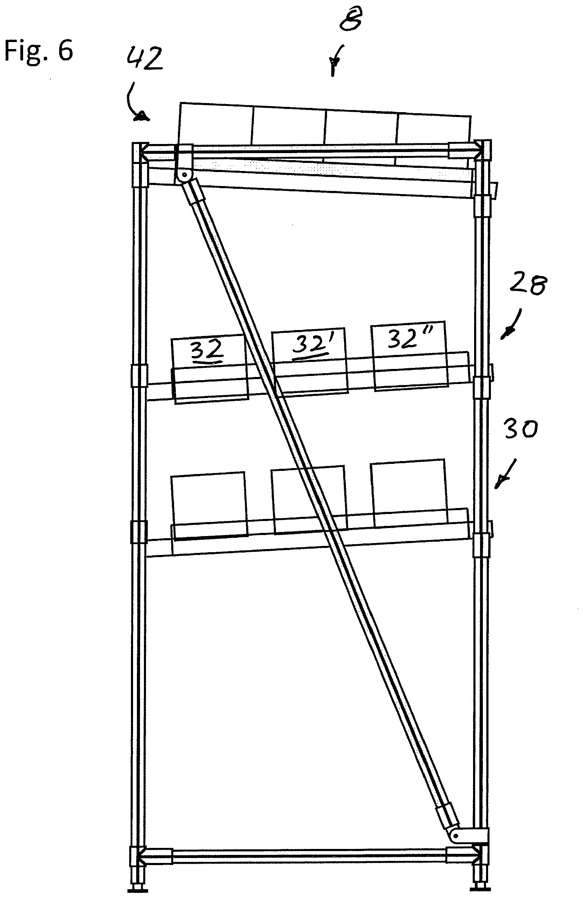

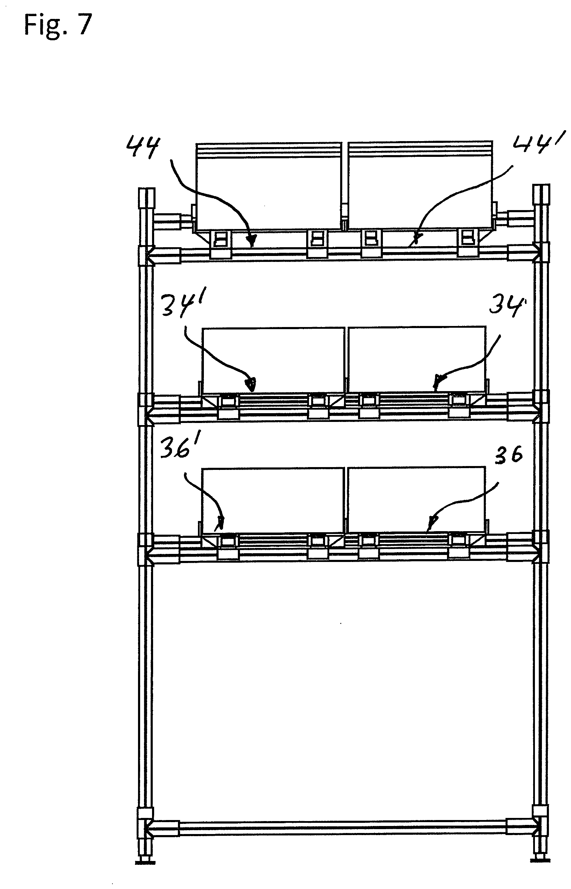

Figur 6 zeigt das Entnahmeregal 8 in einer Seitenansicht, während Figur 7 das Entnahmeregal 8 in einer Ansicht von vorne darstellt. Das Entnahmeregal 8 weist übereinander angeordnete Lagerschächte 28,30 auf, die in Analogie zu den Abgabeschächten 14,16 das FTF 10 als schiefe Ebene mit einer Rollenbahn ausgebildet sein können. Figur 6 und Figur 7 stellen das Entnahmeregal 8 in einem Zustand dar, in dem es mit Behältern gefüllt ist, von denen exemplarisch in Figur 6 drei Behälter mit dem Bezugszeichen 32,32',32" bezeichnet sind. Wie aus Figur 7 ersichtlich ist, sind in den Lagerschächten 28,30 jeweils zwei Ablaufbahnen 34,34' bzw. 36,36' nebeneinander angeordnet.

Zur automatischen Abgabe beispielsweise des Behälters 20 aus dem Abgabeschacht 14 des FTF 10 an den Lagerschacht 28 des Entnahmeregals 8 wird das FTF von der zentralen Einrichtung, ggf. unter Zurhilfenahme einer an dem FTF 10 vorgesehenen Steuerung, so vor dem Entnahmeregal 8 positioniert, dass der Abgabeschacht 14 des FTF 10 mit dem Lagerschacht 28 des Entnahmeregals 8 fluchtet.

In dieser Abgabeposition wird der Position 18 in dem Abgabeschacht 14 zugeordnete Riegel aus der in Figur 4 dargestellten Sperrposition in die in Figur 5 dargestellte Abgabeposition gesteuert, so dass der Behälter 20 unter der Wirkung der Schwerkraft über die als schiefe Ebene ausgebildete Rollenbahn des Abgabeschachtes 14 abrollt und dabei in den Lagerschacht 28 des Entnahmeregales 8 abgegeben wird. Da sich hierbei die den Positionen 18',18" des Abgabeschachtes 14 zugeordneten Riegel weiterhin in ihrer Sperrposition befinden, verbleiben die Behälter 20',20" in dem Abgabeschacht 14. Falls entsprechend dem jeweiligen Materialbedarf an dem Entnahmeregal 8 erforderlich, können die Behälter 20',20" jedoch auch zeitgleich mit dem Behälter 20 oder zeitlich darauffolgend an den Lagerschacht 28 des Entnahmeregales 8 abgegeben werden.

Um zu prüfen, dass ein oder mehrere Behälter tatsächlich in der gewünschten Weise an das Entnahmeregal 8 abgegeben worden sind, können Sensormittel vorgesehen sein.

Bei dem dargestellten Ausführungsbeispiel ist das FTF 10 zur Aufnahme von Leerbehältern an den Entnahmeregalen 8 ausgebildet. Wie aus den Figuren 2 und 3 ersichtlich, weist das FTF 10 oberhalb des Abgabeschachtes 14 einen Aufnahmeschacht 38 für Leerbehälter auf. Aus Figur 3 ist ersichtlich, dass in dem Aufnahmeschacht 38 seitlich nebeneinander zwei Ablaufbahnen 40,40' ausgebildet sind. Die Ablaufbahnen 40,40' sind analog zu den Abgabeschächten 14 des FTF ausgebildet und jeweils nach Art einer schiefen Ebene mit einer Rollenbahn ausgestaltet, wobei die Neigung der schiefen Ebene des Aufnahmeschachtes 38 zu derjenigen des Abgabeschachtes 14 entgegengesetzt ist.

Wie beispielsweise aus Figur 6 ersichtlich ist, ist an dem Entnahmeregal 8 ein Abgabeschacht 42 mit zwei seitlich nebeneinander angeordneten Ablaufbahnen 44,44' (vgl. Figur 7) angeordnet. Die Ablaufbahnen 44,44' sind in Analogie zu den Abgabeschächten 14,16 des FTF 10 und den Lagerschächten 28,30 des Entnahmeregales 8 als schiefe Ebene mit Rollenbahn ausgebildet, wobei die Neigung der schiefen Ebene zu derjenigen der Lagerschächte 28,30 entgegengesetzt ist.

Die Abgabe von Leerbehältern aus dem Abgabeschacht 42 des Entnahmeregales 8 an den Aufnahmeschacht 38 des FTF 10 kann zeitgleich mit der Abgabe von Behältern von dem FTF 10 an das Entnahmeregal 8 oder davor oder danach erfolgen.

Im Sinne einer automatischen Abgabe der Leerbehälter an das FTF 10 kann dem Abgabeschacht 42 des Entnahmeregales 8 beispielsweise ein Sperrelement zugeordnet sein, wie es anhand der Figuren 5 und 6 in Bezug auf das FTF 10 beschrieben worden ist. Durch entsprechende Steuerung kann beispielsweise die Ablaufbahn 44 für eine Abgabe von Leerbehältern an das FTF 10 freigegeben werden, wobei sich die Leerbehälter dann aufgrund der Schwerkraft über die Rollenbahn in Figur 6 nach rechts bewegen und von dem Aufnahmeschacht 38 des FTF 10 aufgenommen werden. An dem in Ablaufrichtung vorderen Ende des Aufnahmeschachtes 38, also an dem in Figur 2 rechten Ende, kann den Ablaufbahnen 40,40' wiederum ein Sperrelement zugeordnet sein, das so aufgebaut sein kann, wie anhand der Figuren 5 und 6 beschrieben. Durch das sich in seiner Sperrposition befindliche Sperrelement ist verhindert, dass in dem Aufnahmeschacht 38 aufgenommene Leerbehälter aufgrund der Schwerkraft über die seitliche Begrenzung des FTF 10 weiter rollen.

Bei einer automatischen Abgabe von Leerbehältern von dem FTF 10 beispielsweise an den Behälter-Lagerbereich 6 können die den Ablaufbahnen 40,40' des Aufnahmeschachtes 38 zugeordneten Sperrelemente dann in ihrer Abgabeposition gesteuert werden.

In der Höhe ist der Aufnahmeschacht 38 des FTF so an den Abgabeschacht 42 des Entnahmeregales 8 angepasst, dass das in Ablaufrichtung vordere Ende des Abgabeschachtes 42 auf der gleichen Höhe liegt, wie das in Ablaufrichtung hintere Richtung des Aufnahmeschachtes 38, wenn sich das FTF 10 vor der Entnahmeregal 8 befindet.

Nach erfolgter Abgabe von gefüllten Behältern von dem FTF 10 an das Entnahmeregal 8 und Aufnahme von Leerbehältern durch das FTF 10, kann die Transportfahrt des FTF gesteuert durch die zentrale Einrichtung fortgesetzt werden. Hierzu kann das FTF 10 entweder weitere Entnahmeregale zur Abgabe von gefüllten Behältern und/oder zur Aufnahme von Leerbehältern anfahren oder zu dem Behälter-Lagerbereich 6 zurückkehren.

In dem Behälter-Lagerbereich kann das FTF 10 dann zur Vorbereitung einer weiteren Transportfahrt erneut gefüllte Behälter aufnehmen. In einem Leerbehälter-Übergabebereich, der beispielsweise in dem Behälter-Lagerbereich 6 gebildet sein kann, können Aufnahmemittel zur voll- oder teilautomatischen Aufnahme von durch ein FTF 10 bereitgestellten Leerbehältern vorgesehen sein. Es ist erfindungsgemäß jedoch auch möglich, dass Leerbehälter, die ein FTF 10 von einer Transportfahrt mitgebracht hat, in dem Behälter-Lagerbereich manuell von Logistikern abgeladen werden.

Es ist erfindungsgemäß auch möglich, zusätzlich zu dem FTF 10 wenigstens ein "Leergut-FTF" vorzusehen, dessen vornehmliche Aufgabe darin besteht, Leerbehälter von den Entnahmeregalen 8 abzuholen. Die Steuerung eines oder mehrerer FTF ist dem Fachmann allgemein bekannt und wird daher hier nicht näher erläutert. Insbesondere können die verwendeten FTF auf unterschiedlichen Fahrwegen verfahren, wobei beispielsweise Ausweichschleifen vorgesehen sein können.

Um beispielsweise an der zentralen Einrichtung stets über die Position eines FTF 10 informiert zu sein, können erfindungsgemäß Mittel zur Positionsermittlung und/oder Visualisierung wenigstens eines FTF vorgesehen sein. Auf diese Weise ist jederzeit feststellbar, wo sich ein FTF gerade befindet. Dies ist insbesondere dann vorteilhaft, wenn eine Störung auftritt.

Alle zuvor beschriebenen Steuerungsvorgänge zur Ansteuerung des FTF 10 und seiner Bestandteile sowie weiterer voll- oder teilautomatischer Bestandteile des Produktionssystems können von der zentralen Einrichtung ausgeführt werden. Es ist jedoch erfindungsgemäß auch möglich, zumindest einen Teil der Steuerungsvorgänge insbesondere des FTF 10 durch eine an dem FTF 10 vorgesehenene Steuerung auszuführen. Die Erfindung stellt damit ein Produktionssystem bereit, durch das die Anlieferung von Material in einem Produktionssystem für die Serienproduktion insbesondere von Kraftfahrzeugen weitgehend automatisierbar ist.

## Patentansprüche

1. Produktionssystem für die Serienproduktion insbesondere von Kraftfahrzeugen,
mit einem Behälter-Lagerbereich zur Lagerung von Behältern, die für die Produktion bestimmte Bauteile enthalten,
mit wenigstens einem entfernt von dem Behälter-Lagerbereich angeordneten Entnahmeregal, aus dem Behälter von Werkern entnehmbar sind und
mit Transportmitteln zum Transport von Behältern von dem Behälter-Lagerbereich zu den Entnahmeregalen,
**dadurch gekennzeichnet,**
**dass** die Transportmittel wenigstens ein fahrerloses Transportfahrzeug (FTF) (10) aufweisen,
**dass** Mittel zur voll- oder teilautomatischen Beladung des FTF (10) mit gefüllten Behältern (20) vorgesehen sind,
**dass** an wenigstens einem Entnahmeregal (8) Sensormittel vorgesehen sind, die abfühlen, ob sich an einer vorbestimmten Stelle des Entnahmeregales (8) ein Behälter (20) befindet,
**dass** eine Transportfahrt eines FTF (10) in Abhängigkeit von wenigstens einem Bedarfsmeldesignal der Sensormittel und/oder von wenigstens einem Bedarfsteuerungssignal der zentralen Einrichtung zur Materialbedarfsplanung auslösbar ist oder ausgelöst wird,
**dass** die zentrale Einrichtung ein FTF (10) nach erfolgter Beladung desselben derart ansteuert, dass das FTF (10) von der Beladeposition zu einer durch die zentrale Einrichtung vorgegebenen Abgabeposition fährt zur Abgabe von geladenen, gefüllten Behältern (20) an wenigstens ein Entnahmeregal (8) und
**dass** das FTF (10) derart eingerichtet und ausgebildet ist, dass Behälter (20) automatisch an Entnahmeregalen (8) abgebbar sind oder abgegeben werden.

2. Produktionssystem nach Anspruch 1, **dadurch gekennzeichnet, dass** das FTF (10) von der zentralen Einrichtung per Funk, insbesondere über ein WLAN, ansteuerbar ist oder angesteuert wird.

3. Produktionssystem nach Anspruch 1 oder 2, **dadurch gekennzeichnet, dass** das FTF (10) in den Behälter-Lagerbereich (6) in eine Beladeposition steuerbar ist, in der das FTF (10) mit gefüllten Behältern (20) beladbar ist oder beladen wird.

4. Produktionssystem nach einem der vorhergehenden Ansprüche, **dadurch gekennzeichnet, dass** das FTF (10) in dem Beladebereich manuell durch einen Logistiker beladbar ist oder beladen wird, wobei die Sensormittel vorzugsweise wenigstens einen optischen Sensor und/oder wenigstens einen elektromechanisch arbeitenden Sensor aufweisen, wobei vorzugsweise wenigstens ein Entnahmeregal (8) eine Ablaufbahn (34,36) für Behälter aufweist und dass ein Fühler des elektromechanisch arbeitenden Sensors in die Ablaufbahn (34,36) hineinragt, wobei die Ablaufbahn (34,36) vorzugsweise als schiefe Ebene ausgebildet ist.

5. Produktionssystem nach Anspruch 4, **dadurch gekennzeichnet, dass** die Sensormittel ein Bedarfsmeldesignal erzeugen, wenn sich an der vorbestimmten Stelle des Entnahmeregales (8) kein Behälter befindet, wobei das Bedarfsmeldesignal drahtlos, insbesondere per Funk zu der zentralen Einrichtung zur Materialbedarfsplanung übertragbar ist oder übertragen wird.

6. Produktionssystem nach einem der vorhergehenden Ansprüche, **dadurch gekennzeichnet, dass** in einem Beladebereich Scannermittel zum Scannen von gefüllten Behältern (20) vorgesehen sind, derart, dass die gefüllten Behälter (20) vor dem Beladen eines FTF (10) gescannt werden, wobei vorzugsweise die Scannermittel wenigstens einen Scanner für eine optoelektronisch lesbare Schrift, insbesondere einen Barcode, und/oder wenigstens eine Kamera aufweisen.

7. Produktionssystem nach Anspruch 6, **dadurch gekennzeichnet, dass** in dem Beladebereich Anzeigemittel zur Visualisierung einer für den jeweiligen Behälter (20) vorgesehenen Position an dem FTF (10) vorgesehen sind, wobei die Anzeigemittel vorzugsweise wenigstens einen Touchscreen aufweisen.

8. Produktionssystem nach einem der vorhergehenden Ansprüche, **dadurch gekennzeichnet, dass** Lokalisierungsmittel zur automatischen Identifizierung und/oder Lokalisierung von Behältern (20) an dem FTF (10) vorgesehen sind, wobei vorzugsweise die Lokalisierungsmittel wenigstens eine Kamera und/oder wenigstens einen Scanner aufweisen und/oder wenigstens ein Lesegerät für einen an dem jeweiligen Behälter (20) angeordneten Transponder, insbesondere einen RFID-Transponder aufweisen.

9. Produktionssystem nach einem der vorhergehenden Ansprüche, **dadurch gekennzeichnet, dass** in dem Beladebereich Belademittel zur teil- oder vollautomatischen Beladung von FTF (10) mit gefüllten Behältern vorgesehen sind und/oder

10. Produktionssystem nach einem der vorhergehenden Ansprüche, **dadurch gekennzeichnet, dass** das FTF (10) Abgabemittel zur automatischen Abgabe von Behältern (20) an Entnahmeregale (8) in der Abgabeposition des FTF (10) aufweisen, wobei vorzugsweise die Abgabemittel durch die zentrale Einrichtung ansteuerbar sind oder angesteuert werden und/oder die Abgabemittel als passive Abgabemittel ausgebildet sind und/oder die Abgabemittel an dem FTF (10) wenigstens einen Abgabeschacht (14) aufweisen, an dem an wenigstens zwei Positionen (18,18',18") hintereinander Behälter (20,20',20") angeordnet sind oder angeordnet werden können, wobei vorzugsweise an dem FTF (10) wenigstens zwei Abgabeschächte (14,14') nebeneinander angeordnet sind und/oderan dem FTF (10) wenigstens zwei Abgabeschächte (14,16) übereinander angeordnet sind und/oder wenigstens ein Abgabeschacht (14) als schiefe Ebene ausgebildet ist und/oder wenigstens ein Abgabeschacht (14) als Rollenbahn ausgebildet ist, wobei vorzugsweise jedem Abgabeschacht (14) wenigstens ein Sperrelement zugeordnet ist, das aus einer Sperrposition, in der der Abgabeschacht (14) gegen eine Abgabe von Behältern (20) gesperrt ist, und einer Abgabeposition beweglich ist, in der der Abgabeschacht (14) für eine Abgabe von Behältern (20) freigegeben ist und/oder dem Abgabeschacht (14) Vereinzelungsmittel zur einzelnen Abgabe von Behältern (20) aus dem Abgabeschacht (14) zugeordnet sind, wobei vorzugsweise die Vereinzelungsmittel den einzelnen Positionen (18,18',18") eines Abgabeschachtes (14) zugeordnete Sperrelemente aufweisen, die aus einer Sperrposition, in der die Position (18,18',18") gegen eine Abgabe des betreffenden Behälters (20,20',20") gesperrt ist, und einer Abgabeposition beweglich sind, in der die betreffende Position (18,18',18") für eine Abgabe eines Behälters (20,20'20") freigegeben ist.

11. Produktionssystem nach einem der vorhergehenden Ansprüche, **dadurch gekennzeichnet, dass** Sensormittel vorgesehen sind, die abfühlen, ob eine Abgabe eines Behälters (20) an ein Entnahmeregal (8) erfolgreich verlaufen ist.

12. Produktionssystem nach einem der vorhergehenden Ansprüche, **dadurch gekennzeichnet, dass** in dem Behälter-Lagerbereich (6) wenigstens ein Abgabeschacht zur Übergabe von gefüllten Behältern an wenigstens ein FTF (10) angeordnet ist.

13. Produktionssystem nach einem der vorhergehenden Ansprüche, **dadurch gekennzeichnet, dass** wenigstens ein FTF (10) zur Aufnahme von Leerbehältern an den Entnahmeregalen (8) ausgebildet ist, wobei vorzugsweise an wenigstens einem Entnahmeregal (8) wenigstens ein Abgabeschacht (42) zur automatischen Abgabe von Leerbehältern an ein FTF (10) vorgesehen
ist.

14. Produktionssystem nach einem der vorhergehenden Ansprüche, **dadurch gekennzeichnet, dass** in einem Leerbehälter-Übergabebereich Aufnahmemittel zur voll- oder teilautomatischen Aufnahme von durch ein FTF (10) bereitgestellten Leerbehältern vorgesehen sind und/oder dass Mittel zur Positionsermittlung und/oder - Visualisierung wenigstens eines FTF (10) vorgesehen sind und/oder dass die in die Bereitstellung und den Transport von Behältern eingebundenen Bestandteile durch die zentrale Einrichtung ansteuerbar sind oder angesteuert werden.

## Claims

1. Production system for the serial production in particular of motor vehicles, with a container storage area for storing containers, which contain components to be used for production, with at least one removal shelf arranged at a distance from the container storage area, from which removal shelf the containers of workers can be removed, and with transport means for transporting containers from the container storage area to the removal shelves,
**characterised in that**
the transport means have at least one driverless transport vehicle (DTV) (10),
means are provided for the full or partial automatic loading of the DTV (10) with filled containers (20),
on at least one removal shelf (8) sensor means are provided which sense whether a container (20) is located in a predefined place of the removal shelf (8),
the transport of a DTV (10) can be triggered or is triggered as a function of at least one demand message signal of the sensor means and/or of at least one demand control signal of the central device for material demand planning,
the central device drives a DTV (10) after the latter has been loaded, such that the DTV (10) moves from the loading position to a delivery position defined by the central device for delivering loaded, filled containers (20) to at least one removal shelf (8) and
the DTV (10) is configured and designed so that containers (20) can be delivered or are delivered automatically to removal shelves (8).

2. Production system according to claim 1, **characterised in that** the DTV (10) can be driven or is driven by the central device via radio, in particular via a WLAN.

3. Production system according to claim 1 or 2, **characterised in that** the DTV (10) can be driven into the container storage area (6) into a loading position in which the DTV (10) can be loaded or is loaded with filled containers (20).

4. Production system according to any of the preceding claims, **characterised in that** the DTV (10) can be loaded or is loaded manually in the loading area by a logistician, wherein the sensor means preferably have at least one optical sensor and/or at least one electromechanically operating sensor, wherein preferably at least one removal shelf (8) has a slipway (34, 36) for containers and a sensor of the electromechanically operating sensor projects into the slipway (34, 36), wherein the slipway (34, 36) is preferably in the form of an inclined plane.

5. Production system according to claim 4, **characterised in that** the sensor means generate a demand message signal, when there is no container located in the prespecified place of the removal shelf (8), wherein the demand message signal can be transmitted or is transmitted wirelessly, in particular via radio to the central device for material demand planning.

6. Production system according to any of the preceding claims, **characterised in that** in a loading area scanner means are provided for scanning filled containers (20), such that the filled containers (20) are scanned before loading a DTV (10), wherein preferably the scanner means have at least one scanner for an optoelectronic readable script, in particular a barcode, and/or at least one camera.

7. Production system according to claim 6, **characterised in that** in the loading area display means are provided for visualising a position on the DTV (10) provided for the respective container (20), wherein the display means preferably have at least one touchscreen.

8. Production system according to any of the preceding claims, **characterised in that** localisation means are provided for the automatic identification and/or localisation of containers (20) on the DTV (10), wherein preferably the localisation means have at least one camera and/or at least one scanner and/or at least one reader for a transponder arranged on the respective container (20), in particular an RFID transponder.

9. Production system according to any of the preceding claims, **characterised in that** in the loading area loading means are provided for the partial or fully automatic loading of DTVs (10) with filled containers and/or

10. Production system according to any of the preceding claims, **characterised in that** the DTV (10) have delivery means for the automatic delivery of containers (20) on removal shelves (8) in the delivery position of the DTV (10), wherein preferably the delivery means can be driven or are driven by the central device and/or the delivery means are designed as passive delivery means and/or the delivery means on the DTV (10) have at least one delivery chute (14), on which containers (20, 20', 20") are arranged or can be arranged in at least two positions (18, 18', 18") behind one another, wherein preferably on the DTV (10) at least two delivery chutes (14, 14') are arranged next to one another and/or on the DTV (10) at least two delivery shafts (14, 16) are arranged above one another and/or at least one delivery shaft (14) is designed as an inclined plane and/or at least one delivery shaft (14) is designed as a roller conveyor, wherein preferably at least one locking element is assigned to each delivery shaft (14), which locking element can be moved out of a locked position in which the delivery shaft (14) is locked against the delivery of containers (20) and a delivery position in which the delivery shaft (14) is open for the delivery of containers (20) and/or separating means are assigned to the delivery shaft (14) for the individual delivery of containers (20) from the delivery shaft (14), wherein preferably the separating means have locking elements assigned the individual positions (18, 18', 18") of a delivery shaft (14), which locking elements are moved out of a locked position in which the position (18, 18', 18") is locked against the delivery of the relevant container (20, 20', 20") and a delivery position in which the relevant position (18, 18', 18") is open for the delivery of a container (20, 20', 20").

11. Production system according to any of the preceding claims, **characterised in that** sensor means are provided which sense whether a delivery of a container (20) to a removal shelf (8) has been completed successfully.

12. Production system according to any of the preceding claims, **characterised in that** in the container storage area (6) at least one delivery shaft is arranged for transferring filled containers to at least one DTV (10).

13. Production system according to any of the preceding claims, **characterised in that** at least one DTV (10) is designed to receive empty containers on the removal shelves (8), wherein preferably on at least one removal shelf (8) at least one delivery shaft (42) is provided for the automatic delivery of empty containers to a DTV (10).

14. Production system according to any of the preceding claims, **characterised in that** in an empty container transfer area receiving means are provided for fully or partially automatically receiving empty containers provided by a DTV (10) and/or means are provided for determining the position and/or visualising at least one DTV (10) and/or the components involved in the provision and transport of containers can be driven or are driven by the central device.

## Revendications

1. Système de production pour la production en série, plus particulièrement de véhicules automobiles,
avec une zone de stockage de récipients pour le stockage de récipients qui contiennent des composants destinés à la production,
avec au moins un rayonnage de prélèvement disposé loin de la zone de stockage de récipients, dans lequel des récipients peuvent être prélevés par des ouvriers et
avec des moyens de transport pour le transport de récipients de la zone de stockage de récipients vers les rayonnages de prélèvement,
**caractérisé en ce que**
les moyens de transport comprennent au moins un véhicule de transport sans conducteur (FTF) (10),
des moyens sont prévus pour le chargement entièrement ou partiellement automatisé du FTF (10) avec des récipients (20) remplis,
sur au moins un rayonnage de prélèvement (8), sont prévus des moyens de capteurs qui détectent si un récipient (20) se trouve à un endroit déterminé du rayonnage de prélèvement (8),
un trajet de transport d'un FTF (10) peut être déclenché ou est déclenché en fonction d'au moins un signal de signalisation de besoin des moyens de capteurs et/ou d'au moins un signal de contrôle des besoins du système central de planification des besoins en matériel,
le système central contrôle un FTF (10) selon le chargement effectué de celui-ci de façon à ce que le FTF (10) se déplace de la position de chargement vers une position de distribution prédéterminée par le système central pour la distribution de récipients remplis (20) chargés au niveau d'au moins un rayonnage de prélèvement (8) et
le FTF (10) est conçu de façon les récipients (20) puissent être déposés ou soient déposés automatiquement au niveau de rayonnages de prélèvement (8).

2. Système de production selon la revendication 1, **caractérisé en ce que** le FTF (10) peut être contrôlé ou est contrôlé par le système central par radio, plus particulièrement par l'intermédiaire d'un WLAN.

3. Système de production selon la revendication 1 ou 2, **caractérisé en ce que** le FTF (10) peut être contrôlé, dans la zone de stockage de récipients (6), dans une position de chargement dans laquelle le FTF (10) peut être chargé ou est chargé avec des récipients (20) remplis.

4. Système de production selon l'une des revendications précédentes, **caractérisé en ce que** le FTF (10) peut être chargé ou est chargé manuellement dans la zone de chargement par un logisticien, les moyens de capteurs comprenant de préférence au moins un capteur optique et/ou au moins un capteur fonctionnant de manière électromécanique, de préférence au moins un rayonnage de prélèvement (8) comprenant une piste de sortie (34, 36) pour les récipients et **en ce qu'**une sonde de capteur fonctionnant de manière électromécanique dépasse dans la piste de sortie (34, 36), la piste de sortie (34, 36) étant de préférence conçue comme un plan incliné.

5. Système de production selon la revendication 4, **caractérisé en ce que** les moyens de capteurs génèrent un signal de signalisation des besoins lorsque aucun récipient ne se trouve à l'endroit prédéterminé du rayonnage de prélèvement (8), le signal de signalisation des besoins pouvant être transmis ou étant transmis par radio au système central pour la planification des besoins en matériel.

6. Système de production selon l'une des revendications précédentes, **caractérisé en ce que**, dans une zone de chargement, sont prévus des moyens de scannage pour le scannage de récipients remplis (20), de façon à ce que les récipients remplis (20) soient scannés avant le chargement d'un FTF (10), de préférence les moyens de scannage comprenant au moins un scanner pour un marquage lisible de manière optoélectronique, plus particulièrement un code-barre et/ou au moins une caméra.

7. Système de production selon la revendication 6, **caractérisé en ce que**, dans la zone de chargement, sont prévus des moyens d'affichage pour la visualisation d'une position prévue pour le récipient (20) correspondant au niveau du FTF (10), les moyens d'affichage comprenant de préférence au moins un écran tactile.

8. Système de production selon l'une des revendications précédentes, **caractérisé en ce que** des moyens de localisation sont prévus pour l'identification et/ou la localisation automatique de récipients (20) au niveau du FTF (10), de préférence les moyens de localisation comprenant au moins un scanner et/ou au moins un appareil de lecture pour un transpondeur disposé sur le récipient (20) correspondant, plus particulièrement un transpondeur RFID.

9. Système de production selon l'une des revendications précédentes, **caractérisé en ce que**, dans la zone de chargement, sont prévus des moyens de chargement pour le chargement partiellement ou entièrement automatique de FTF (10) avec des récipienst remplis et/ou

10. Système de production selon l'une des revendications précédentes, **caractérisé en ce que** les FTF (10) comprennent des moyens de distribution pour la distribution automatique de récipients (20) sur les rayonnages de prélèvement (8) dans la position de distribution du FTF (10), de préférence les moyens de distribution pouvant être contrôlés ou étant contrôlés par le système central et/ou les moyens de distribution étant conçus comme des moyens de distribution passifs et/ou les moyens de distribution comprenant, sur le FTF (10), au moins un compartiment de distribution (14), au niveau duquel, à au moins deux positions (18, 18', 18") les unes derrière les autres sont disposés ou peuvent être disposés des récipients (20, 20', 20"), de préférence, sur le FTF (10), sont juxtaposés au moins deux compartiments de distribution (14, 14') et/ou, sur le FTF (10), sont superposés au moins deux compartiments de distribution (14, 16) et/ou au moins un compartiment de distribution (14) est conçu comme un plan incliné et/ou au moins un compartiment de distribution (14) est conçu comme une piste de roulement, de préférence, à chaque compartiment de distribution (14), correspond au moins un élément de blocage qui est mobile entre une position de blocage, dans laquelle le compartiment de distribution (14) est bloqué contre une distribution de récipients (20) et une position de distribution dans laquelle le compartiment de distribution (14) est libéré pour une distribution de récipients (20) et/ou au compartiment de distribution (14) correspondent des moyens de séparation pour la distribution individuelle de récipients (20) à partir du compartiment de distribution (14), de préférence les moyens de séparation comprenant des éléments de blocage correspondant aux différentes positions (18, 18', 18") d'un compartiment de distribution (14), qui sont mobiles entre une position de blocage, dans laquelle la position (18, 18', 18") est bloquée contre une distribution du récipient (20, 20', 20") concerné et une position de distribution dans laquelle la position (18, 18', 18") concernée est libérée pour une distribution d'un récipient (20, 20', 20").

11. Système de production selon l'une des revendications précédentes, **caractérisé en ce que** des moyens de capteurs sont prévus qui détectent si une distribution d'un récipient (20) s'est déroulé avec succès au niveau d'un rayonnage de prélèvement (8).

12. Système de production selon l'une des revendications précédentes, **caractérisé en ce que**, dans la zone de stockage de récipients (6) est disposé au moins un compartiment de distribution pour le transfert de récipients remplis vers au moins un FTF (10).

13. Système de production selon l'une des revendications précédentes, **caractérisé en ce qu'**au moins un FTF (10) est conçu pour le logement de récipients vides sur les rayonnages de prélèvement (8), de préférence au moins un compartiment de distribution (42) étant prévu au niveau d'au moins un rayonnage de prélèvement (8) pour la distribution automatique de récipients vides à un FTF (10).

14. Système de production selon l'une des revendications précédentes, **caractérisé en ce que**, dans une zone de transfert de récipients vides, sont prévus des moyens de logement pour le logement entièrement ou partiellement automatique de récipients vides mis à disposition par un FTF (10) et/ou **en ce que** des moyens de détermination et/ou de visualisation de la position d'au moins un FTF (10) sont prévus et/ou **en ce que** les composants intégrés dans la mise à disposition et/ou le transport de récipients peuvent être contrôlés ou sont contrôlés par le système central.
